# EUROPÄISCHE PATENTANMELDUNG

(11) **EP 4 711 201 A1**
(43) Veröffentlichungstag der Anmeldung: **18.03.2026**
(21) Anmeldenummer: 25202124.1
(22) Anmeldetag: 15.09.2025
(51) Int. Cl.: B60P 3/39

(54) **FLEXIBLES EINBAUMÖBEL UND INNENRAUM MIT EINEM FLEXIBLEN EINBAUMÖBEL**

(30) Priorität: 17.09.2024 DE 102024126728
(71) Anmelder: Rickmann, Juri, 45259 Essen Nordrhein-Westfalen (DE)
(72) Erfinder: Rickmann, Juri, 45259 Essen Nordrhein-Westfalen (DE)
(74) Vertreter: KBN IP Patentanwälte Partnerschaft mbB

(57) **Zusammenfassung**

Die Erfindung betrifft ein flexibles Einbaumöbel für einen kleinen Innenraum (2), insbesondere eines Campers (1), mit einer über Lagermittel in einer Führung beweglich gelagerten Funktionsfläche (3), die von einer Gebrauchsposition in Verstauposition hin und her verlagerbar ist. Die Führung umfasst ein Schienensystem (4) mit zumindest zwei auf gegenüberliegenden Seiten im Raum befestigten, gegenüberliegenden Führungsschienen.

Die bekannten Einbaumöbel haben den Nachteil, dass sie aufwändig zu bedienen sind oder viel Platz beanspruchen. Dies verbessert die Erfindung dadurch, dass die Führungsschienen einen ersten Abschnitt (4') und einen zweiten Abschnitt (4") umfassen, wobei in der Gebrauchsposition die Funktionsfläche (3) über die Lagermittel im ersten Abschnitt (4') gehalten ist und die Lagermittel bei Verschieben der Funktionsfläche (3) in die weitere Position in Abschnitten der Führungsschienen außerhalb des ersten Abschnitts (4') gehalten sind, wobei die Führungsschienen derart ausgebildet sind, dass die Funktionsfläche (3) in eine andere, horizontale oder vertikale Ebene verlagert ist.

## Beschreibung

Die Erfindung betrifft ein flexibles Einbaumöbel nach dem Oberbegriff des Anspruch 1. Die gattungsgemäßen Einbaumöbel werden bevorzugt in Verbindung mit kleinen Räumen genutzt, die zu unterschiedlichen Zwecken, beispielsweise alternativ als Schlafraum oder als Wohnraum, benutzt werden sollen. Dies können Innenräume von Wohnwagen oder Wohnmobilen, aber auch kleine Zimmer einer Wohnung, Einraum-Häuser (sogenannte Tiny Houses), Kabinen in der Schifffahrt und Luftfahrt oder Ladeflächen eines Caravans sein, ohne dass die Anwendung der Erfindung hierauf beschränkt ist.

Das Einbaumöbel weist eine bewegliche Funktionsfläche auf, wobei bei einer bevorzugten Ausgestaltung die Funktionsfläche von einer Gebrauchsposition in wenigstens eine zweite Position, insbesondere eine inaktive Verstauposition verlagerbar ist. Dies kann über eine Führung motorisch angetrieben oder manuell geschehen. Die Führung wiederum ist Teil eines Mechanismus mit einem Schienensystem, das in Einbaulage des Einbaumöbels zumindest zwei, auf gegenüberliegenden Seiten der Funktionsfläche angeordnete Führungsschienen aufweist, in denen die Ränder der Funktionsfläche zumindest abschnittsweise beweglich, mittelbar oder unmittelbar geführt sind. Hierdurch ist die Funktionsfläche eben, sich biegend oder faltend längs der Führungsschienen beweglich.

Ein flexibles Einbaumöbel dieser Art ist aus der EP 2 842 803 A1 bekannt. Dieses Einbaumöbel dient als Bett für den Laderaum eines Fahrzeugs, insbesondere eines Caravans. Auf beiden Seiten des Laderaums werden hier Führungsschienen am Fahrzeug befestigt, in denen die Latten eines Lattenrostes von der inaktiven Stellung in eine Position verlagerbar sind, in der das Lattenrost eine Liegefläche für eine Person bildet. Diese Vorrichtung erlaubt zwar die Nutzung des Laderaums als Schlafplatz, hat aber den Nachteil, dass die zusammengeschobenen Latten in der inaktiven Position sehr viel Platz beanspruchen.

Aus der DE 10 2004 041 581 A1 ist eine Liegefläche für den Laderaum eines Fahrzeugs bekannt, die von zwei Rollen, die jeweils an einer Seite des Laderaums gegenüberliegend angeordnet sind, abrollbar sind. Die Liegefläche wird hierbei durch Spannen der abgerollten Lage nach der Art einer Hängematte in Form gehalten. Diese Ausgestaltung hat neben dem Nachteil des erhöhten Platzbedarfs den weiteren Nachteil, dass der Liegekomfort aufgrund des Durchhängens der Liegefläche eingeschränkt ist. Eine ähnliche Lösung mit den gleichen Nachteilen ist als Bett für ein Fahrzeug in der US 1 589960 A und als Bett für die Schlafkoje eines Lastkraftwagens in der DE 10 2011 117 365 A1 beschrieben. Ein Bett in Form einer Hängematte mit allen Nachteilen einer Hängematte hinsichtlich des Liegekomforts ist auch aus der GB 2 604 378 A bekannt.

Aus der EP 3 006 264 A1 ist ein Antriebs- und Führungsmechanismus für ein Klappbett in einem Campingfahrzeug bekannt. Der Antriebs- und Führungsmechanismus ist von einer Antriebswelle mit doppelten Rollen gebildet, auf denen zwei mit den vier Ecken eines Bettes verbundene Gurte beidseitig aufgewickelt sind. Über die Rollen kann das Bett nach oben gezogen werden. Der Nachteil dieser Lösung besteht darin, dass das Bett von oben nach unten und umgekehrt im Raum bewegt wird, so dass der entsprechende Bewegungsspielraum frei bleiben muss. Ferner hängt das Bett im inaktiven Zustand frei unter der Decke des Campingfahrzeugs und deckt somit zum Bespiel Lichtkuppeln oder ähnliches ab. Ähnliche Lösungen mit den gleichen Nachteilen sind aus der EP 4 126 592 A1, der EP 3 936 383 B1 und der CA 2 759 640 A1 bekannt.

Aus der EP 1 667 553 A1 ist ein Klappbett zur Verwendung beim Camping, bei Booten, der Möblierung von Ein-Zimmer-Apartments und anderen Unterkunftsarten mit Platzmangel bekannt. Das Bett ist zwischen einer unteren Gebrauchsstellung und einer oberen, inaktiven Stellung, in der es unter der Decke des Raums angeordnet ist, hin und her beweglich. Es weist zumindest einen ersten Rahmen und einen damit gelenkig verbundenen zweiten Rahmen auf, wobei die beiden Rahmen zusammen eine Metallstruktur für den Lattenrost bilden. Der erste Rahmen ist an der Wand des Raums gelenkig angebracht und der zweite Rahmen wird über Seile an der Decke gehalten, wobei er über ein Aufwickeln bzw. ein Abwickeln der Seile zwischen der unteren Gebrauchsposition und einer oberen inaktiven Position hin und her bewegt werden kann.

Auch dieses bekannte Klappbett weist den Nachteil auf, dass trotz einer höheren Stabilität des Bettes vergleichsweise viel Raum für die Klappbewegung des Rahmens erforderlich ist.

Aufgabe der Erfindung ist es daher, ein flexibles Einbaumöbel zu schaffen, das einen möglichst hohen Komfort und einen möglichst geringen Platzbedarf aufweist und während und nach dem Überführen in die inaktive Position leicht bedient werden kann. Eine weitere Aufgabe der Erfindung besteht darin, einen Innenraum, zum Beispiel eines Campers oder eines Wohnwagens, einer Kabine in der Schifffahrt oder in der Luftfahrt oder eines Hauses mit einem solchen flexiblen Einbaumöbel zu schaffen.

Diese Aufgabe wird nach der Erfindung durch ein flexibles Einbaumöbel nach Anspruch 1 gelöst. Das neue Einbaumöbel zeichnet sich insbesondere dadurch aus, dass die Führungsschienen einen ersten Abschnitt und einen zweiten Abschnitt umfassen. In der Gebrauchsposition ist die Funktionsfläche über die Lagermittel im ersten Abschnitt gehalten, während nach dem Verschieben der Funktionsfläche in die weitere Position die Lagermittel in den Führungsschienen außerhalb des ersten Abschnitts in einem zweiten oder dritten Abschnitt gehalten sind. In diesem, vom ersten Abschnitt verschiedenen Bereich der Führungsschienen ist dieser derart ausgebildet, dass die Funktionsfläche durch das Verschieben längs dieses Abschnittes in eine von der Ebene der Gebrauchsposition unterschiedliche, horizontale oder vertikale Ebene verlagert ist. Bezüglich des Innenraums mit einem solchen Einbaumöbel wird die Aufgabe durch einen Innenraum nach Anspruch 13 gelöst.

Das erfindungsgemäße Einbaumöbel ist bestimmungsgemäß dafür vorgesehen, in kleinen Räumen verwendet zu werden. Dies können zum Beispiel die eingangs genannten Anwendungen in Verbindung mit Campern oder Wohnwagen, Kabinen in der Schifffahrt oder in der Luftfahrt oder anderen kleinen Räumen sein. Natürlich ist die Erfindung hierauf nicht beschränkt, das Prinzip des neuen Einbaumöbels kann auch dort genutzt werden, wo eigentlich genügend Raum für größere Möbel zur Verfügung stünde. Das Einbaumöbel kann grundsätzlich jede Art von Möbel sein, dass verlagerbar sein soll. Insbesondere kann das Einbaumöbel ein Bett, ein Tisch oder eine sonstige Arbeitsplatte sein.

Bisher wurden solche Einbaumöbel, wie aus dem bekannten Stand der Technik ersichtlich, entweder hoch- oder runtergeklappt oder über Seilzüge bewegt, beispielsweise nach oben unter die Decke des Raums gezogen. Dies hat den Nachteil, dass das die Funktionsfläche aufweisende oder bildende Einbaumöbel in der Nähe der Gebrauchsposition verbleibt, wobei hier nicht immer ausreichend Platz hierfür vorhanden ist und darüber hinaus auch oft der optische Eindruck als störend empfunden wird. Durch die Erfindung wird es nun möglich, das Einbaumöbel besonders leicht an eine Position zu verlagern, in der es nicht mehr stört oder auch gar nicht mehr sichtbar ist.

Der besondere Vorteil liegt dabei darin, dass die Führungsschienen einfach im Raum angeordnet werden können. Bei entsprechender Raumgröße können die Führungsschienen beispielsweise an den Wänden des Raumes vorgesehen werden, wobei sie einander gegenüberliegend, an den Wänden des Raums befestigt sein können. Alternativ können sie auch anderweitig angeordnet und befestigt sein. So können zum Beispiel Führungsschienen aufklappbar sein oder erst vor dem Verlagern des Einbaumöbels ganz oder teilweise montiert werden. Weist zum Beispiel ein Camper oder Wohnwagen eine längs des Raumes verlaufende, halbhohe, sideboard- oder küchenzeilenähnliche Möbelreihe auf, kann ein Teil der Führungsschiene, insbesondere der erste Abschnitt, vor dem Verlagern des zum Beispiel als Bett ausgebildeten Einbaumöbels auf einer Seite auf diese Möbelreihe aufgelegt werden. Dies kann durch Zusammenstecken oder Auseinanderklappen eines faltbaren Abschnitts im Bedarfsfall erfolgen.

Über Befestigungsmittel können abnehmbare oder bewegliche Teile der Führungsschiene fixiert und gesichert werden. Der bedarfsorientierte Aufbau kann je nach räumlichen Begebenheiten auf beiden Seiten oder auch nur auf einer Seite des Einbaumöbels erfolgen. Die beweglichen oder im Bedarfsfall durch Zusammenstecken zu montierenden Teile des Schienensystems können über Bodenstützen, seitliche Querträger zur Verbindung mit einer Seitenwand oder vorhandene Möbelstücke oder eine Kombination hieraus gestützt werden.

Dadurch, dass die Funktionsfläche in den Führungsschienen geführt ist, kann das Einbaumöbel längs der Führungsschienen besonders einfach in eine andere Ebene verschoben werden, wobei diese andere Ebene parallel zur Gebrauchsposition oder auch in einem Winkel hierzu angeordnet sein kann. In letzterem Fall ist der Winkel bevorzugt ein rechter Winkel. Ferner ist es möglich, das Einbaumöbel auch vollständig zu drehen und zum Beispiel unter einen doppelten Boden zu verlagern. Der Verlauf der Führungsschienen, also deren Krümmung und weitere Ausgestaltung, gibt dabei die Verlagerung der Funktionsfläche in die andere Ebene vor.

Die Funktionsfläche kann eine starre, durchgehende Fläche sein. Dies bietet sich insbesondere dann an, wenn das Einbaumöbel zum Beispiel ein eher kleinerer Tisch ist. Wird dagegen ein Bett als Einbaumöbel vorgesehen, wird die Liegefläche bei vielen Anwendungen zu groß sein, um sie als Ganzes in die weitere Position zu verlagern. Dies ist insbesondere dann der Fall, wenn es sich zum Beispiel um ein größeres Bett für zwei Personen handelt. Hierzu müsste der entsprechende freie Raum vorhanden sein, um die Funktionsfläche dann zu drehen oder mit einem Höhenversatz zu verlagern. In solchen Fällen ist die Funktionsfläche bevorzugt mehrteilig ausgebildet, wobei die einzelnen Teile gelenkig miteinander verbunden sein können oder bzw. und separat in dem Schienensystem gelagert sein können.

Sofern die einzelnen Teile der Funktionsfläche über die Führungsschienen des Schienensystems mittelbar miteinander verbunden sind, werden sie in der Gebrauchsposition einfach hintereinander aufgereiht. Arretierungsmittel können in einem solchen Fall verhindern, dass die einzelnen Teile der Funktionsfläche ungewollt auseinandergeschoben werden. Hierzu können entweder die Einzelteile der Funktionsfläche oder auch das Schienensystem entsprechende Brems- oder Feststellmittel aufweisen. Die Mehrteiligkeit der Funktionsfläche kann auch genutzt werden, um bei Bewegen der Funktionsfläche aus der Gebrauchsposition heraus diese Teile in zwei oder mehr Teile aufzuteilen und diese separat voneinander zu verstauen. Hierzu kann das Schienensystem Abzweigungen aufweisen, über die eine getrennte Verstauung der einzelnen Teile möglich ist.

Bei einer ersten Ausgestaltung der Erfindung weist das Schienensystem die zwei schon genannten, gegenüberliegenden Führungsschienen auf, die beispielsweise einander gegenüberliegend an gegenüberliegenden Seiten des Raumes befestigt sein können. Die Befestigung kann unmittelbar oder mittelbar an den Wänden oder an vorhandenen Einbauten, beispielsweise Möbeln, erfolgen. Der erste Abschnitt dieser Führungsschienen hält die Funktionsfläche in der Gebrauchsposition. So können diese ersten Abschnitte beispielsweise gradlinig, in einer Ebene liegend ausgebildet sein. Die Funktionsfläche ist dann zum Beispiel mit vier Lagern in diesen ersten Abschnitten gelagert.

An die ersten Abschnitte schließt sich jeweils ein zweiter Abschnitt an, der zunächst einen Versatz der Funktionsfläche in eine andere Ebene ermöglicht. Hierzu sind die Abschnitte der Führungsschienen dieses Bereiches gekrümmt. Soll beispielsweise die Funktionsfläche nur vertikal versetzt in eine Ebene unter der Decke oder auf dem Boden des Raumes verlagert werden, hätte dann jede einzelne Führungsschiene im Wesentlichen die Form eines "S" mit verlängerten oberen und unteren Schenkeln. Die verlängerten Bereiche sind dann jeweils so lang, dass die Funktionsfläche an den Endpositionen wieder horizontal angeordnet ist.

Alternativ können die Führungsschienen auch U-förmig gebogen sein, so dass die Funktionsfläche in eine Ebene unterhalb oder oberhalb der Gebrauchsposition verlagert werden kann. Mit einer solchen Verlagerung geht üblicherweise eine Krümmung der Funktionsfläche während der Bewegung einher. Ansonsten müsste der zum klappenden oder schwenkenden Bewegen der Funktionsfläche notwendige Raum zu groß sein. Steht ein entsprechender Raum zur Verfügung, kann natürlich eine zusammenhängende Funktionsfläche verwendet werden. Da dies aber üblicherweise nicht der Fall ist, insbesondere nicht in kleinen Wohnräumen eines Campers oder Wohnwagens, wird die Funktionsfläche in diesem Fall mit den schon beschriebenen Einzelsegmenten oder leicht biegbar ausgebildet werden, so dass sie sich, zum Beispiel der Krümmung der Führungsschienen folgend, ebenfalls während der Verlagerung von der Gebrauchsposition in die weitere Position verformen lässt. Dies erlaubt auch die Realisierung vergleichsweise enger Kurven.

So kann zum Beispiel eine Ausgestaltung des Einbaumöbels als Bett ausgebildet sein, wobei die Funktionsfläche dann die Unterlage für eine Matratze oder auch eine vollständige Polsterung darstellen kann. Im Bereich der gewünschten Schlafhöhe sind dann geradlinige Abschnitte der Führungsschienen als erster Abschnitt vorgesehen. Hieran schließt sich dann ein U-förmiger Bereich der Führungsschienen an, der wiederum in einen geradlinigen Teil des zweiten Abschnittes übergeht. Wird nun die segmentierte Führungsfläche, deren Einzelsegmente zum Beispiel beidseitig in einer der beiden gegenüberliegenden Führungsschienen geführt sind, bewegt, wird die als Liegeunterlage dienende Funktionsfläche um 180° gedreht und zum Beispiel unter den Boden des Raumes bewegt, so dass sie nicht mehr sichtbar ist. Der Durchlass, über den die Führungsfläche beim Bewegen in die Verstauposition durch den Boden durchgeführt wird, kann über eine Klappe verschlossen werden. Auf diese Weise kann ein relativ flacher Hohlraum unter dem Boden ausreichend sein, um das Bett vollständig zu verstauen und aus dem Blickbereich des Benutzers zu entfernen. Das gleiche Prinzip kann natürlich für einen Tisch oder zum Verlagern der Funktionsfläche in eine doppelte Decke oder eine Seitenwand verwendet werden.

Ferner ist es möglich, eine geteilte Funktionsfläche zu verwenden, wobei ein erster Teil über ein gemeinsames oder ein erstes Schienensystem in eine erste Verstauposition und ein zweiter Teil über das gemeinsames oder ein zweites Schienensystem in eine andere Verstauposition verbracht werden kann. Die beiden Verstaupositionen können zum Beispiel Räume in, vor oder an den Seitenwänden oder an der Decke und dem Boden des Raums sein. In Gebrauchsposition können die beiden Teile dann neben- oder hintereinander angeordnet werden und, wenn gewünscht, miteinander verbunden werden.

Schließlich kann das Schienensystem auch Führungsschienen mit drei Abschnitten aufweisen. Diese können genutzt werden, um drei Positionen anzubieten, in denen die Funktionsfläche angeordnet werden kann. Eine Zwischenposition kann genutzt werden, um temporär die Funktionsfläche anzuordnen, beispielsweise um Platz zum Beladen eines Campingfahrzeuges zu erhalten. Ferner kann die Zwischenpositionen benutzt werden, um die Funktionsfläche auch besser rangieren zu können.

So ist es zum Beispiel möglich, dass, wie oben beschrieben, die Funktionsfläche mit einem U-förmig gebogenen, zweiten Abschnitts der Führungsschienen zunächst unter Drehung um 180° unter die Decke des Raumes bewegt wird. Anschließend kann die Funktionsfläche dann in die entgegengesetzte Richtung in einen dritten Abschnitt der Führungsschienen bewegt werden, der mit seiner Orientierung die endgültige Verstauposition bietet. In diesem Fall kann also die Funktionsfläche aus Sicht des zweiten Abschnittes der Führungsschienen sowohl in den ersten Abschnitt als auch in den dritten Abschnitt bewegt werden.

Die Wahl, welcher der Abschnitte als Ziel genutzt wird, kann über eine Weiche, die auch automatisch bei Erreichen des jeweiligen Endpunktes des dritten, des zweiten und/oder ersten Abschnitts der Führungsschienen geschaltet werden kann, erfolgen. Bei einer leicht zu bewegenden Funktionsfläche kann natürlich auch der Benutzer durch leichten Druck oder Zug auf die Funktionsfläche dafür Sorge tragen, dass der gewünschte Abschnitt der Führungsschienen gewählt wird. Schließlich ist natürlich auch ein manuelles Umschalten der Weiche möglich.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: einen Camper mit einer ersten Ausgestaltung eines erfindungsgemäßen Einbaumöbels in einer teilweise geschnittenen Seitenansicht,
- Fig. 2: die Einzelheit "Z" aus Figur 1 in vergrößerter Darstellung,
- Fig. 3: das Schienensystem der in den Figuren 1 und 2 dargestellten Ausgestaltung,
- Fig. 4: den in Figur 1 dargestellten Camper mit in Richtung der Verstauposition bewegtem Einbaumöbel,
- Fig. 5: den in Figur 4 dargestellten Camper mit weiter in eine Zwischenposition bewegtem Einbaumöbel,
- Fig. 6: den in den Figuren 1, 4 und 5 dargestellten Camper mit in die Verstauposition bewegtem Einbaumöbel,
- Fig. 7: eine weitere Ausgestaltung eines Campers mit einem flexiblen Einbaumöbel,
- Fig. 8: der in Figur 7 dargestellte Camper mit in die Verstauposition bewegtem Einbaumöbel,
- Fig. 9: eine dritte Ausgestaltung eines Campers mit einem flexiblen Einbaumöbel,
- Fig. 10: das Schienensystem des in Fig. 9 dargestellten Einbaumöbels,
- Fig. 11: eine Variante des in Figur 10 dargestellten Schienensystems,
- Fig. 12: eine Detailansicht eines Schienensystems mit motorischem Antrieb,
- Fig. 13: einen Ausschnitt eines Camper-Innenraums mit einem motorisch betätigten Einbaumöbel,
- Fig. 14: eine schematische Detailansicht einer Variante des Schienensystems mit einem klappbaren ersten Abschnitt der Führungsschiene und
- Fig. 15: eine schematische Detailansicht einer weiteren Variante des Schienensystems mit einem zusammensteckbaren ersten Abschnitt der Führungsschiene.

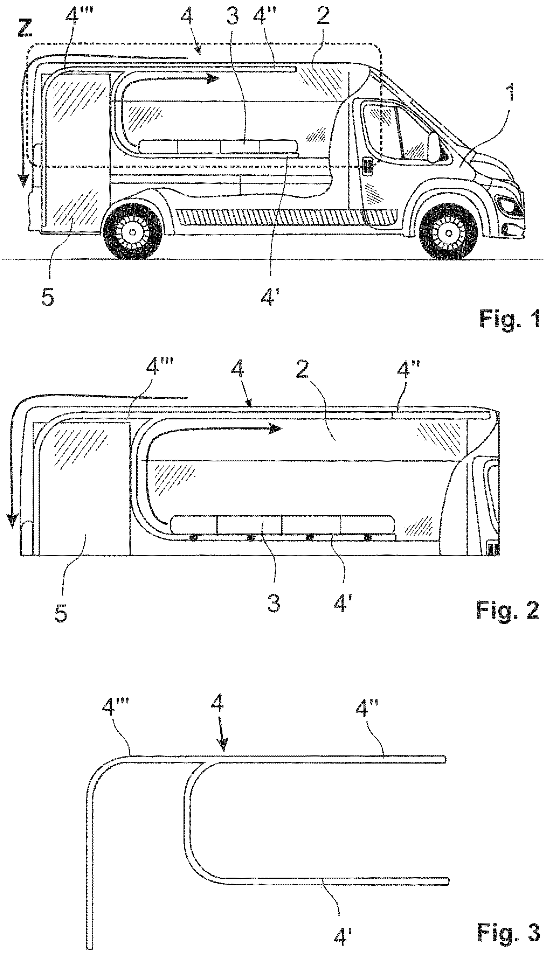

In Figur 1 ist eine erste Ausgestaltung eines erfindungsgemäßen Einbaumöbels dargestellt. Es handelt sich hier um ein Wohnmobil, einen sogenannten Camper 1. Dieser weist einen Innenraum 2 auf, der zum Beispiel hinter der Fahrerkabine angeordnet ist und als Wohnraum genutzt wird. Im hinteren Bereich des Innenraums 2 ist stilisiert ein Nutzraum 5 dargestellt, dies kann zum Beispiel eine Nasszelle sein. Es handelt sich hier um einen vergleichsweise kompakten Camper 1 mit einem Innenraum 2, der möglichst multifunktional benutzt werden muss.

In dem Innenraum 2 ist als Funktionsfläche 3 eine Liegefläche vorgesehen. Diese Liegefläche ist hier exemplarisch von vier Einzelsegmenten gebildet. Während des Tages oder während der Fahrt werden die Benutzer die Funktionsfläche 3 verlagern wollen, um den Innenraum 2 für andere Zwecke zu nutzen. Beispielsweise kann hier ein Tisch aufgestellt werden. Erfindungsgemäß ist nun zum leichten Verlagern der Funktionsfläche 3 ein Schienensystem 4 vorgesehen, das im gezeigten Ausführungsbeispiel ermöglicht, die Funktionsfläche 3 zunächst unter die Decke und anschließend in den hinteren Raum des Innenraums 2 zu verlagern. Dies ist allerdings nur eine beispielhafte Lösung.

Figur 2 zeigt die Einzelheit Z mit dem Schienensystem 4 aus Figur 1 in einer vergrößerten Darstellung. Die Bewegungsrichtung der Funktionsfläche 3 ist mit den Pfeilen gekennzeichnet. In der gezeigten Stellung befindet sich die Funktionsfläche 3 in der Gebrauchsposition. Das Bett ist also zum Benutzen durch eine oder mehrere Personen bereitgestellt. Wird das Bett nicht mehr benutzt, schiebt der Benutzer die Funktionsfläche 3 nach links. Hier sind die vier Segmente, die zusammen die Funktionsfläche 3 bilden, jeweils einzelnen auf jeder Seite in den Führungsschienen des Schienensystems 4 gelagert, was in der Zeichnung durch die schwarzen Punkte stilisiert angedeutet ist.

Das Schienensystem 4 weist zwei gegenüberliegende Führungsschienen auf, die jeweils an einer Seitenwand des Campers 1 oder auch im Raum oder an anderen, bevorzugt fest eingebauten Möbeln befestigt sein können. Sie weisen einzelne Abschnitte auf, wobei ein erster Abschnitt der Führungsschiene 4' in Höhe der Schlafposition bzw. der Gebrauchsposition horizontal angeordnet ist. Hieran schließt sich in Richtung des hinteren Fahrzeugteils ein U-förmig gebogener Teil der Führungsschienen an. Durch diese Biegung der Führungsschienen wird beim Verschieben der Funktionsfläche 3 in die erste Pfeilrichtung die Funktionsfläche 3 um 180° gedreht und unter die Decke des Innenraums 2 verlagert.

Nachfolgend kann bei der gezeigten Ausgestaltung die Funktionsfläche 3 dann ganz nach hinten geschoben werden, wobei hier die Führungsschienen um 90° nach unten gebogen sind, so dass in der finalen Verstauposition die Funktionsfläche 3 vertikal an der hinteren Seite des Innenraums 2 angeordnet ist. Die Position unter der Decke des Innenraums 2 ist also eine Zwischenposition, in der die Funktionsfläche 3 weitgehend ohne zu stören zwischengelagert werden kann. Dies kann natürlich auch die endgültige Verstauposition sein.

Die Zwischenposition hat den Vorteil, dass sowohl das Fahrzeugheck als auch der Bereich des Innenraums 2, in der in Gebrauchsposition die Funktionsfläche 3 liegt, frei zugänglich sind. Die Zugänglichkeit des Hecks kann zum Beispiel zum Beladen des Fahrzeugs genutzt werden, während beim Bewohnen des Campers 1 an der Parkposition die Funktionsfläche 3 in diesem hinteren Bereich verlagert wird.

In Figur 3 ist das Schienensystem 4 der in den Figuren 1 und 2 dargestellten Ausgestaltung als Einzelteil dargestellt. Zu erkennen ist, dass die Gebrauchsposition durch den ersten Abschnitt 4' der Führungsschienen bereitgestellt wird. Dies ist ein auf mittlerer Höhe verlaufender, horizontaler Abschnitt der Führungsschienen. Hieran schließt sich der U-förmig gebogene Bereich an, der in den zweiten Abschnitt 4" der Führungsschienen übergeht, in der die Funktionsfläche 3 unter der Decke des Fahrzeuges angeordnet ist. In entgegengesetzte Richtung schließt sich wiederum, verbunden mit dem ersten Abschnitt 4' und dem zweiten Abschnitt 4" über eine weichenartige Verbindung, der dritte Abschnitt 4‴ des Schienensystems 4 an.

Durch die Biegung des Übergangsbereiches zwischen dem ersten Abschnitt 4' und dem zweiten Abschnitt 4" muss der Benutzer zum Überführen der Funktionsfläche 3 in den zweiten Abschnitt 4" außer dem Bewegen der einzelnen Teile der Funktionsfläche 3 nichts weiter unternehmen. Soll nun die Funktionsfläche 3 in den dritten Abschnitt 4‴ überführt werden, kann dies entweder dadurch geschehen, dass der Benutzer beim Verschieben der Funktionsfläche 3 die einzelnen Segmente der Funktionsfläche 3 nach oben drückt, so dass sie nicht nach unten abzweigen können, oder er stellt entsprechende Führungsmittel um, die ein Abrutschen nach unten verhindern. Die Führungsmittel können wie bei einer herkömmlichen Weiche eines Gleissystems des Eisenbahnverkehrs ausgebildet sein und manuell oder automatisch geschaltet werden.

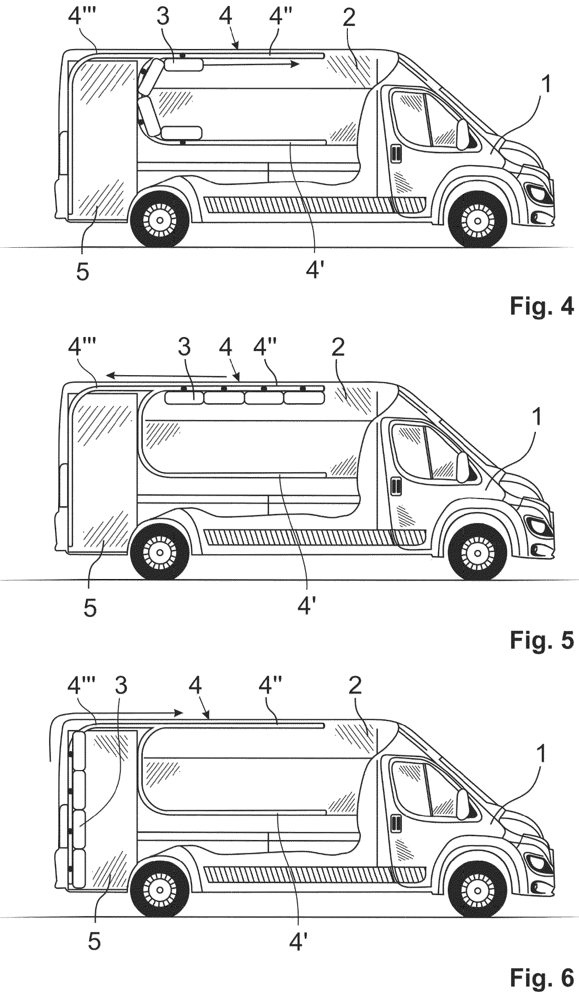

In den Figuren 4, 5 und 6 ist die Bewegung der Funktionsfläche 3 von der Gebrauchsposition (vergleiche Figur 4) in die weitere Position unter der Decke (vergleiche Figur 5) und weiter in die endgültige Verstauposition (vergleiche Figur 6) dargestellt.

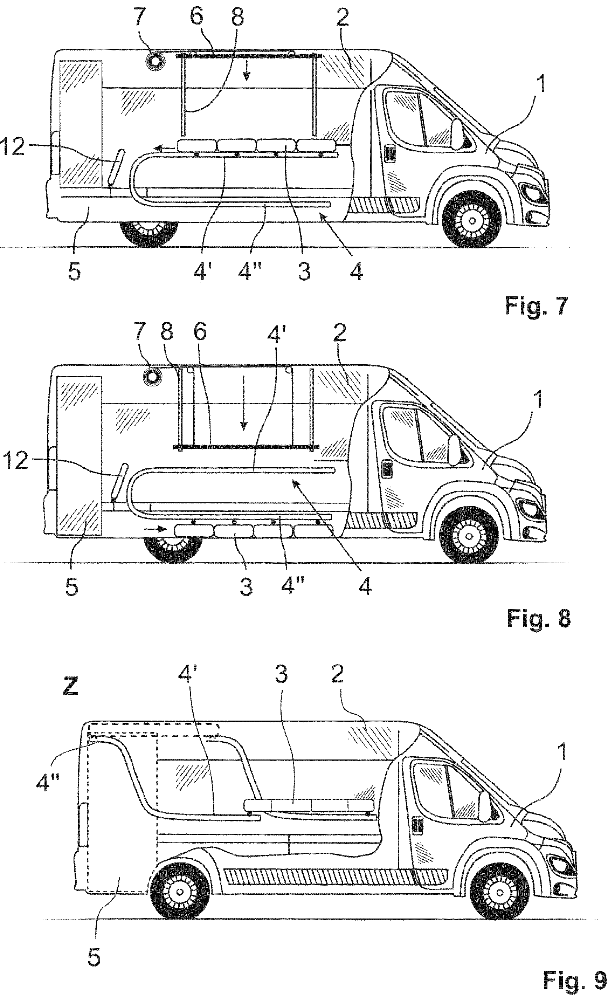

Figur 7 und Figur 8 zeigen eine weitere Ausgestaltung der Erfindung. Bei dieser Ausgestaltung ist die Funktionsfläche 3 ebenfalls das Bett eines Campers 1. Die Gebrauchsposition ist in Figur 7 dargestellt. Der hier gezeigte Camper 1 weist einen doppelten Boden auf, der im hinteren Bereich eine Klappe 12 aufweist, über die der Innenraum 2 des doppelten Bodens zugänglich ist bzw. verschlossen werden kann.

Das Schienensystem 4 ist so ausgebildet, dass durch das Verschieben der Funktionsfläche 3 von der Gebrauchsposition im ersten Abschnitt 4' der Führungsschienen in die Verstauposition im zweiten Abschnitt 4" der Führungsschienen die Funktionsfläche 3 durch die Klappe 12 hindurch unter den oberen Teil des doppelten Bodens verlagert wird. Hierdurch ist sie zum einen in Verstauposition nicht sichtbar und zum anderen vor Verschmutzung geschützt. Es muss sich hierbei nicht nur um einen doppelten Boden handeln, der Raum unter der Oberseite des Bodens kann auch größer sein und damit teilweise zum Beispiel auch als Gepäckraum dienen. Natürlich kann auf gleiche Weise auch eine Zwischendecke genutzt werden, um die Funktionsfläche 3 elegant verschwinden zu lassen. Bei einer solchen Ausgestaltung ist es natürlich zweckmäßig, wenn ein motorischer Antrieb vorgesehen ist, der es erleichtert, die Funktionsfläche 3 in den oft nicht gut zugänglichen Raum des doppelten Bodens oder der Zwischendecke zu verlagern.

Die Ausgestaltung nach Figur 7 und Figur 8 weist zusätzlich einen Tisch 6 auf, der über Hebemittel 8 von einer Gebrauchsposition, die zum Beispiel der Gebrauchsposition der Funktionsfläche 3 entsprechen kann, in eine Verstauposition, hier unter der Decke des Campers 1, verlagert werden kann. Diese Hebemittel 8 sind hier als Seilzug 7 ausgebildet. Eine solche Lösung ist aus dem Stand der Technik bekannt. Nach dem Verstauen der Funktionsfläche 3 kann der Benutzer einfach den Tisch 6 von der Decke herablassen und nachfolgend gebrauchen, wobei die als Seilzug 7 ausgebildeten Hebemittel 8 den Vorteil haben, dass sich der Tisch 6 nicht von einer Seite zu der gegenüberliegenden Seite des Campers 1 erstrecken muss.

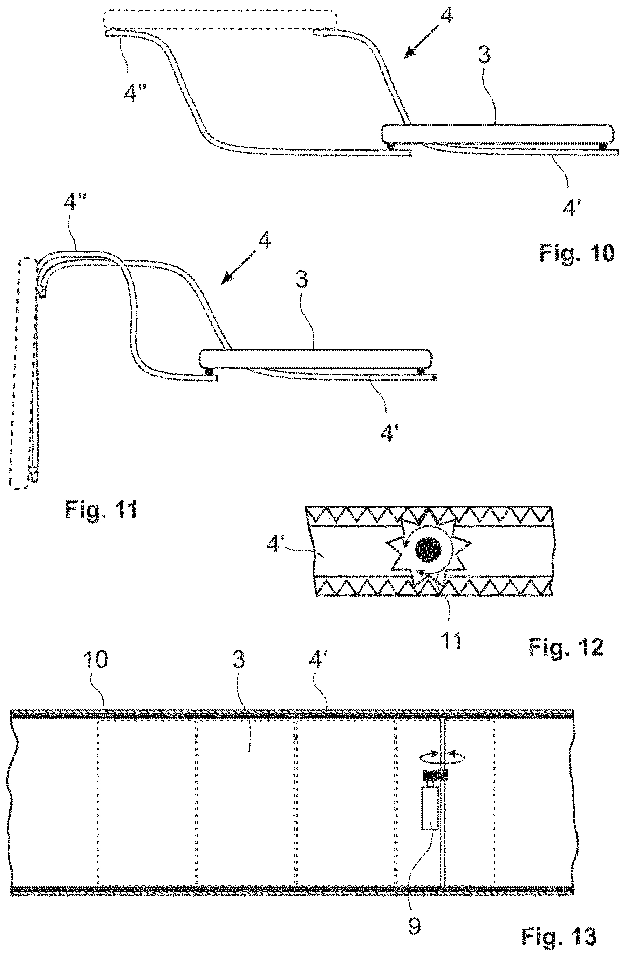

In Figur 9 ist eine dritte Ausgestaltung der Erfindung dargestellt. Diese weist ein Schienensystem 4 mit zwei einzelnen Führungsschienen auf. Diese Führungsschienen sind in Figur 10 im Detail dargestellt. Für den vorderen Bereich und den hinteren Bereich der Funktionsfläche 3 ist jeweils eine Führungsschiene auf jeder Seite der Funktionsfläche 3 vorgesehen. Das Schienensystem 4 weist damit auf jeder Seite zwei und damit insgesamt vier Einzelschienen auf. Die Einzelschienen sind derart gebogen, dass bei Verlagerung der Funktionsfläche 3 nach hinten beide Bereiche, der vordere und der hintere Bereich, simultan nach oben verlagert werden. Dies kann zum Beispiel eine Position unter der Decke des Campers 1 sein. Eine solche Lösung bietet sich insbesondere dann an, wenn der Raum lang genug ist, um die Funktionsfläche 3 auch vertikal hinter der Gebrauchsposition anzuordnen.

Die in Figur 11 dargestellte Variante des Schienensystems 4 erlaubt es dagegen, die Funktionsfläche 3 in der Verstauposition, wie in Figur 6 dargestellt, vertikal im hinteren Bereich des Campers 1 anzuordnen. Hierzu ist die hintere Einzelschiene, die hier den zweiten Abschnitt 4" der Führungsschienen bildet, vertikal nach unten geführt, so dass der hintere Bereich der Funktionsfläche 3 nach unten abgekippt werden kann. Die in den Figuren dargestellten Verläufe der Führungsschienen des Schienensystems 4 sind natürlich nur beispielhaft zu verstehen, ebenso gut kann beispielsweise die Funktionsfläche 3 auch nach vorne, zum Beispiel über die Fahrerkabine, verlagert werden.

Die Bewegung der Funktionsfläche 3 in den Führungsschienen des Schienensystems 4 kann bei einer etwas aufwändigeren Variante motorisch angetrieben erfolgen. Eine schematische Lösung für einen solchen Antrieb zeigen die Figuren 12 und 13. Hier sind die Führungsschienen als C-Profil mit einer inneren Verzahnung ausgebildet. An der Funktionsfläche 3 ist an ihrer Unterseite oder auch in die Funktionsfläche 3 integriert eine Antriebsstange vorgesehen, die motorisch in Rotation versetzt wird. Am Ende der Antriebsstange befinden sich Ritzel 11, die in das C-Profil der Führungsschienen hineinragen und dort mit der Verzahnung kämmen. Dies ist schematisch in Figur 12 wiedergegeben.

Figur 13 zeigt den Bereich der Funktionsfläche 3. Diese Funktionsfläche 3 weist Einzelsegmente auf, die miteinander verbunden sind. Im vorderen Bereich ist unter dem ersten Einzelsegment der Antrieb vorgesehen. Ein Motor 9 versetzt über ein Zwischengetriebe eine von einer Seite zur gegenüberliegenden Seite des Campers 1 verlaufende Antriebsstange in Rotation und kann so das erste Segment der Funktionsfläche 3 hin und her bewegen. Die weiteren Segmente der Funktionsfläche 3 sind mit dem ersten Segment verbunden, so dass sie mit der Bewegung des ersten Segmentes mit bewegt werden, das erste Segment also die weiteren Segmente vor sich herschiebt oder hinter sich her schleppt, je nachdem in welche Richtung das erste Segment bewegt ist.

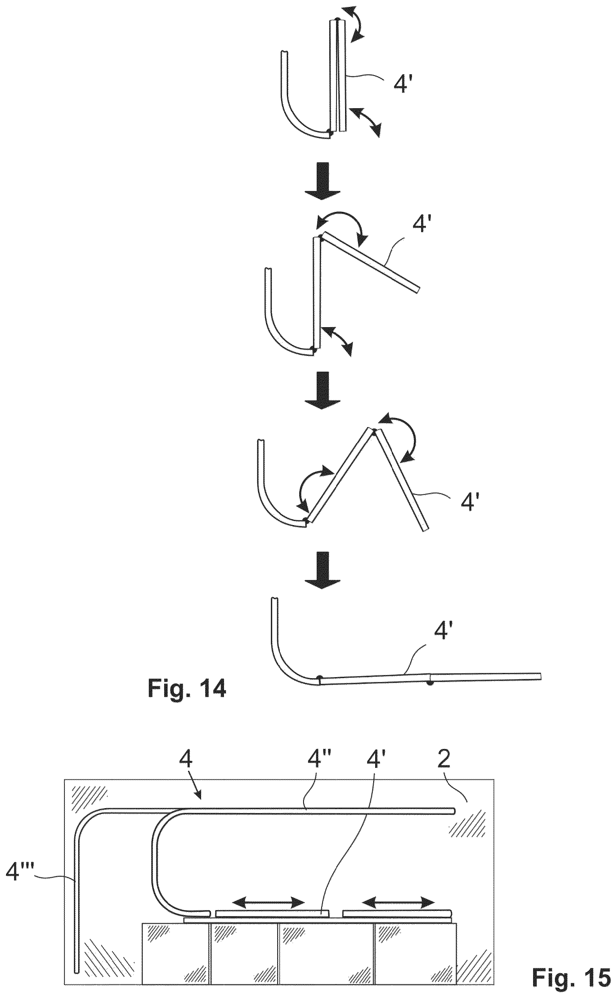

Figur 14 zeigt einen Teil eines alternativen Schienensystems 4, der in Verbindung mit der vorliegenden Erfindung benutzt werden kann. Es handelt sich hier um einen Teil des ersten Abschnitts 4' des zuvor beschriebenen Schienensystems 4. Dieser erste Abschnitt ist bei diesem Ausführungsbeispiel keine feste, starre Schiene, sondern wird von einer aus mehreren Einzelsegmenten zusammengesetzten Schiene gebildet. Im linken Teil ist dies zunächst der aus Figur 3 bekannte gebogene Bereich. Der horizontal verlaufende Teil der ersten Führungsschiene 4' besteht aus zwei klappbaren Segmenten, die zum einen am gebogenen vorderen Teil und zum anderen an einander gelenkig gelagert sind.

Durch die Segmentierung und gelenkige Verbindung kann nun dieser erste Abschnitt 4' der Führungsschiene, nachdem die Funktionsfläche 3 in Verstauposition verbracht wurde, in Richtung des gebogenen vorderen Abschnittes gefaltet werden. Hierdurch nimmt er weniger Platz ein oder stört optisch weniger, was natürlich insbesondere dann praktikabel ist, wenn dieser erste Abschnitt 4' der Führungsschiene nach dem Aufklappen auf einem Möbelstück aufliegt oder frei im Raum positioniert ist. In Figur 14 sind die einzelnen Stadien des Aufklappens des ersten Abschnitts 4' untereinander gezeigt.

Figur 15 zeigt einen Ausschnitt aus dem Innenraum 2 eines Campers 1 mit einer anderen Ausgestaltung des ersten Abschnitts 4' der Führungsschiene. Hier sind die einzelnen, in Figur 14 gelenkig miteinander verbundenen Segmente zusammensteckbar ausgeführt. Dies kann über übliche Steckverbindungen realisiert werden, die die Beweglichkeit der Haltemittel innerhalb der Führungsschiene auch über die Verbindungen hinweg ermöglichen. Eine solche Führungsschiene kann bei Nichtgebrauch, wenn also die Funktionsfläche 3 in die Verstauposition verbracht wurde, demontiert werden. Dieser zusammensteckbare erste Abschnitt 4' der Führungsschiene ist hier auf Einbaumöbel in Form einer niedrigen Schrank- oder Sideboard-Reihe aufgelegt, wobei zum Schutz vor Beschädigungen eine schützende Zwischenschicht oder Gummilager vorgesehen sein sollten. Dieser Aufbau kann beim Umrüsten des zuvor als Aufenthalts- oder Wohnraum genutzten Innenraums 2 zu einem Schlafraum aus einem Lagerraum entnommen, zusammengesteckt und aufgelegt werden. Anstelle einer zusammengesteckten Lösung können natürlich auch Teleskopstangen oder ähnliche Lösungen verwendet werden.

Die dargestellte Anzahl der Segmente ist sowohl im Fall der Ausgestaltung nach Figur 14 als auch im Fall der Ausgestaltung nach Figur 15 lediglich beispielhaft zu verstehen, hier können auch andere Teilungen Verwendung finden. Ferner können natürlich auch andere Möglichkeiten, Teile bzw. Abschnitte der Führungsschienen platzsparend zu verstauen, verwendet werden.

Die Führungsschienen können aufgesetzte oder frei im Raum angeordnete Schienen sein, alternativ soll unter dem Begriff Führungsschiene aber auch eine Führung in einer Nut oder an einem Vorsprung in einer Wandung 10 des Campers verstanden werden. Wesentlich ist nur, dass Haltemittel der Funktionsfläche in dem Schienensystem geführt beweglich sind. Dies wird bevorzugt eine Nut-/Feder-Verbindung sein, aber auch andere Längsführungen können verwendet werden.

### Bezugszeichenliste:

- 1: Camper
- 2: Innenraum
- 3: Funktionsfläche
- 4: Schienensystem
- 4': Erster Abschnitt der Führungsschiene
- 4": Zweiter Abschnitt der Führungsschiene
- 4‴: Dritter Abschnitt der Führungsschiene
- 5: Nutzraum
- 6: Tisch
- 7: Seilzug
- 8: Hebemittel
- 9: Motor
- 10: Wandung des Campers
- 11: Ritzel
- 12: Klappe

## Patentansprüche

1. Flexibles Einbaumöbel für einen Raum, insbesondere für den Innenraum (2) eines Campers (1), eines Wohnwagens, von kleinen Einraum-Häusern, Kabinen in der Schifffahrt und Luftfahrt oder kleinen sonstigen Wohnräumen, mit einer Funktionsfläche (3), die mit Lagermitteln in einer Führung beweglich gelagert ist und manuell oder motorisch angetrieben von einer Gebrauchsposition in eine weitere Position, insbesondere in eine inaktive Verstauposition, hin und her verlagerbar ist, wobei die Führung ein Schienensystem (4) mit zumindest zwei gegenüberliegenden Führungsschienen aufweist, die bestimmungsgemäß im Raum befestigt werden und auf gegenüberliegenden Seiten der Funktionsfläche (3) angeordnet sind, **dadurch gekennzeichnet, dass**
die Führungsschienen einen ersten Abschnitt (4') und einen zweiten Abschnitt (4") umfassen, wobei in der Gebrauchsposition die Funktionsfläche (3) über die Lagermittel im ersten Abschnitt (4') gehalten ist und bei Verschieben der Funktionsfläche (3) von der Gebrauchsposition in die weitere Position die Lagermittel in Abschnitten der Führungsschienen außerhalb des ersten Abschnitts (4') gehalten sind und die Führungsschienen außerhalb des ersten Abschnitts (4') derart ausgebildet sind, dass die Funktionsfläche (3) in eine von der Ebene der Gebrauchsposition unterschiedliche, horizontale oder vertikale Ebene verlagert ist.

2. Flexibles Einbaumöbel nach Anspruch 1, **dadurch gekennzeichnet, dass** der zweite Abschnitt (4") der Führungsschienen parallel zum ersten Abschnitt (4') der Führungsschienen verläuft, wobei der erste Abschnitt (4') und der zweite Abschnitt (4") der Führungsschienen über einen Verbindungsabschnitt miteinander verbunden sind.

3. Flexibles Einbaumöbel nach dem vorhergehenden Anspruch, **dadurch gekennzeichnet, dass** der Verbindungsabschnitt um 180° gebogen ist und der zweite Abschnitt (4") und der erste Abschnitt (4') der Führungsschienen in zwei zueinander parallelen, horizontalen Ebenen liegt, wobei der zweite Abschnitt (4") der Führungsschienen derart ausgebildet ist, dass die Funktionsfläche (3) in der weiteren Position ober- oder unterhalb der Gebrauchsposition oder in horizontaler Richtung hierzu versetzt angeordnet werden kann.

4. Flexibles Einbaumöbel nach einem der vorhergehenden Ansprüche, **dadurch gekennzeichnet, dass** die Führungsschienen einen dritten Abschnitt (4‴) umfassen, wobei die Funktionsfläche (3) von der Gebrauchsposition wahlweise in eine weitere Position verlagerbar ist, in der ihre Lagermittel in den Führungsschienen des zweiten Abschnitts (4") gehalten oder in den Führungsschienen des dritten Abschnitts (4‴) gehalten sind.

5. Flexibles Einbaumöbel nach dem vorhergehenden Anspruch, **dadurch gekennzeichnet, dass** der dritte Abschnitt (4‴) derart ausgebildet ist, dass die Funktionsfläche (3) in einer weiteren Position gehalten ist, die in einer Ebene liegt, die in einem Winkel zur Ebene der Gebrauchsposition angeordnet ist, insbesondere in einer vertikalen Ebene liegt.

6. Flexibles Einbaumöbel nach einem der vorhergehenden Ansprüche, **dadurch gekennzeichnet, dass** das Schienensystem (4) zumindest einen ersten Abschnitt (4'), einen zweiten Abschnitt (4") und einen dritten Abschnitt (4‴) sowie eine aktive oder passive Weiche aufweist, über die die Funktionsfläche (3) von einem der Abschnitte (4', 4" oder 4‴) in einen der anderen Abschnitte (4', 4" oder 4‴) elektromotorisch, hydraulisch, pneumatisch oder manuell verlagerbar ist.

7. Flexibles Einbaumöbel nach dem vorhergehenden Anspruch, **dadurch gekennzeichnet, dass** das Schienensystem (4) derart ausgebildet ist, dass die Weiche den ersten Abschnitt (4'), den zweiten Abschnitt (4") und den dritten Abschnitt (4‴) miteinander verbindet, wobei das Schienensystem (4) derart ausgebildet ist, dass die Funktionsfläche (3) von der Gebrauchsposition, in der die Lagermittel im ersten Abschnitt (4') gehalten sind, in eine weitere Position, in der die Lagermittel im zweiten Abschnitt (4") gehalten sind und nachfolgend in eine dritte Position, in der die Lagermittel im dritten Abschnitt (4‴) gehalten sind, überführbar ist.

8. Flexibles Einbaumöbel nach dem vorhergehenden Anspruch, **dadurch gekennzeichnet, dass** die Weiche durch Einschieben aller Lagermittel in den zweiten Abschnitt (4") automatisch umgeschaltet wird, so dass die Weiche bei Erreichen des zweiten Abschnitts (4") durch die aus der Gebrauchsposition im ersten Abschnitt (4') kommende Funktionsfläche (3) umschaltet und bei entgegengesetzter Bewegung der Funktionsfläche (3) die Funktionsfläche (3) in den dritten Abschnitt (4‴) leitet und bei Erreichen des zweiten Abschnitts (4") durch die aus dem dritten Abschnitt (4‴) kommende Funktionsfläche (3) wiederum umschaltet und bei dann entgegengesetzter Bewegung der Funktionsfläche (3) die Funktionsfläche (3) in den ersten Abschnitt (4') leitet.

9. Flexibles Einbaumöbel nach einem der vorhergehenden Ansprüche, **dadurch gekennzeichnet, dass** das Schienensystem (4) ein vorderes, erstes Paar von gegenüberliegenden, die Funktionsfläche (3) zwischen sich einschließenden Schienen und ein hinteres, zweites Paar von gegenüberliegenden, die Funktionsfläche (3) zwischen sich einschließenden Schienen aufweist, wobei das vordere Paar und das hintere Paar der Schienen jeweils Schienenabschnitte mit dem ersten Abschnitt (4') und dem zweiten Abschnitt (4") und, falls vorhanden, dem dritten Abschnitt (4‴) aufweisen.

10. Flexibles Einbaumöbel nach einem der vorhergehenden Ansprüche, **dadurch gekennzeichnet, dass** die Funktionsfläche (3) von zwei oder bevorzugt mehreren Teilflächen gebildet ist, die zur Bildung einer gemeinsamen Funktionsfläche (3) bevorzugt gelenkig miteinander verbunden sind.

11. Flexibles Einbaumöbel dem vorhergehenden Anspruch, **dadurch gekennzeichnet, dass** zumindest zwei, bevorzugt jede der Teilflächen über Lagermittel im Schienensystem (4) beweglich gelagert sind.

12. Flexibles Einbaumöbel nach einem der vorhergehenden Ansprüche, **dadurch gekennzeichnet, dass** die Funktionsfläche (3) ein Bett oder Tisch ist.

13. Innenraum (2) eines Campers (1) oder eines Wohnwagens, einer Kabine in der Schifffahrt oder in der Luftfahrt oder eines Hauses mit einem flexiblen Einbaumöbel nach einem der vorhergehenden Ansprüche.

14. Innenraum (2) nach dem vorhergehenden Anspruch, **dadurch gekennzeichnet, dass** das Schienensystem (4) Führungsschienen aufweist, die zumindest mit einem Teil, der eine der Seiten der Funktionsfläche (3) stützt, an einer Wand des Innenraums (2) angeordnet ist, wobei auf jeder Seite der Funktionsfläche (3) Führungsschienen an gegenüberliegenden Wänden des Innenraums (2), angeordnet sind oder zumindest auf einer Seite der Funktionsfläche (3) eine Führungsschiene auf Stützen oder auf anderen Einbaumöbeln aufliegend im Abstand zur Wand des Innenraums (2) angeordnet ist und wobei diese Im Abstand zur Wand angeordnete Führungsschiene bevorzugt klappbar oder zusammensteck- und demontierbar ausgebildet ist.

15. Innenraum (2) nach einem der beiden vorhergehenden Ansprüche, **dadurch gekennzeichnet, dass** der Innenraum (2) einen oberen Boden mit einem darunter angeordneten Hohlraum aufweist, wobei der ersten Abschnitt (4') des Schienensystems (4) oberhalb des oberen Bodens und ein weiterer Abschnitt (4" oder 4‴) des Schienensystems (4) zumindest abschnittsweise derart ausgebildet und unter dem oberen Boden angeordnet ist, dass die Funktionsfläche (3) in eine Verstauposition beweglich ist, die unter dem oberen Boden in dem Hohlraum liegt.
